# EUROPEAN PATENT APPLICATION

(11) **EP 3 721 961 A1**
(43) Date of publication of application: **14.10.2020**
(21) Application number: 18902819.4
(22) Date of filing: 19.12.2018
(51) Int. Cl.: B01D 3/08, B01L 3/16, B01D 3/42

(54) **ROTARY EVAPORATOR CAPABLE OF ACCURATELY QUANTIFYING CONCENTRATED LIQUID AND/OR DISTILLATE**

(30) Priority: 23.01.2018 CN 201810061892; 23.01.2018 CN 201810061916
(71) Applicant: Beijing Normal University, Beijing 100875 (CN)
(72) Inventor: WEN, Shuyao, Beijing 100875 (CN)
(74) Representative: Sun, Yiming
(86) International application number: PCT/CN2018/121938
(87) International publication number: WO 2019/144730

(57) **Abstract**

The invention relates to the technical field of chemical experiment equipment, especially relates to a kind of rotary evaporator, specifically relates to a kind of rotary evaporator which the volume of concentrate and/or the volume of distillate can be controlled accurately. The concentrate and/or the distillate can be drained by the rotary evaporator said without disassembling the distillation flask and/or the collection flask, the reason is that a liquid outlet is formed at the bottom of the distillation flask, another liquid outlet is formed at the bottom of the collection flask. Each liquid outlet is connected a thin tube with scale lines. A quantitative expansion vessel may be set at the low part of each thin tube as required. Small changes of volume of concentrate and/or small changes of volume of distillate can be observed during distillation. The volume of concentrate and/or the volume of distillate can be controlled accurately before drainage. The invention is used to compare the difference of concentrates from different samples on the basis of same concentrate rate, the difference of distillates from different samples on the basis of same solvent reclamation rate, the difference of concentrates from a sample on the basis of different concentrate rate and the difference of distillates from a sample on the basis of different solvent reclamation rate.

## Description

### FIELD OF THE INVENTION

The invention relates to the technical field of chemical experiment equipment, especially relates to a kind of rotary evaporator, specifically relates to a kind of rotary evaporator which the volume of concentrate and/or the volume of distillate can be controlled accurately.

### BACKGROUND OF THE INVENTION

Rotary evaporator is a kind of equipment for vacuum distillation of materials. It is widely used in the experiments of sample concentration, drying and solvent reclamation, especially used in the experiment of rapidly distilling a large amount of solvent. The rotary evaporator of existing technology is usually composed of a vacuum pumping device, a heating device, a condensing device, a rotating device, and so on. Its working principle is that the distillation flask is rotated at a constant speed and is heated in a water bath or oil bath under vacuum controlled by electronic equipment. Solution in the distillation flask is heated, diffused and evaporated under vacuum, the heating temperature may be close to the boiling point of the solvent, solvent is quickly reclaimed. The rotation speed is the most suitable speed. Constant speed rotation of distillation flask makes the solution form film, the evaporation area of solution is increased, the solvent reclamation speed faster.

Take the RE-3000-type rotary evaporator produced by Shanghai YARONG Biochemical Instrument Company as an example, the heating temperature, the rotation rate, the height of the distillation flask can be set when the rotary evaporator of the existing technology is used. The amount of distillation feed can be measured. The accurate volume of distillate in collection flask or the accurate volume of concentrate in distillation flask during distillation cannot be set because it cannot be realized. The control of volume of distillate or the control of volume of concentrate within distillation depends on the estimation of experimenter. The distillation time limitation method has been tried many times, it is proved that the method cannot ensure the volume of concentrate or the volume of distillate same each time. There are two reasons: 1) the length of time of each time is not exactly the same from the beginning of vacuuming to reaching the normal negative pressure of system, 2) the sealing of system of each time is not exactly the same. Even if experienced experimenter draws a line on the outer wall of the collection flask to ensure the same volume of distillate each time, there will be at least an error of 1.5mL between two times. The reason is that the collection flask or the distillation flask is usually spherical. The error seriously affects related research, especially when the feed is randomly obtained from nature, the components and other indicators of the feed, concentrate and distillate are determined after distillation. If the concentrate rate (ratio of the volume of concentrate to the volume of feed) or solvent reclamation rate (ratio of the volume of distillate to the volume of feed) from different samples are not same, distillation results won't be compared. Take the reclamation of water in sewage as an example, a higher solvent reclamation rate and better water quality is looked forward to. In practice, a higher water reclamation rate and worse water quality from one sample, a lower water reclamation rate and better water quality from another sample, they are not compared. If the number of water quality indicator is more than one, they are even more difficult to be compared. It is of great significance to a rotary evaporator that how the volume of distillate or the volume of concentrate can be controlled accurately and how the distillate or the concentrate can be discharged without disassembling the collection flask and the distillation flask. The great significance is that the difference of concentrates (or distillates) from different samples can be compared on the basis of same concentrate rate (or same distillate reclamation rate) and the difference of concentrates (or distillates) from one sample can be compared on the basis of different concentrate rate (or different distillate reclamation rate).

### SUMMARY OF THE INVENTION

A rotary evaporator which the volume of concentrate can be accurately controlled is provided by the invention. The problem is solved that the volume of concentrate can be quantitatively controlled.

A rotary evaporator which the volume of distillate can be accurately controlled is also provided by the invention. The problem is solved that the volume of distillate can be quantitatively controlled.

A rotary evaporator which the volume of concentrate and the volume of distillate can be accurately controlled is also provided by the invention. The problems are solved that the volume of concentrate and the volume of distillate can be quantitatively controlled.

To achieve the above purpose, a kind of rotary evaporator which the volume of concentrate can be accurately controlled is provided by the invention. The rotary evaporator said includes a support, a detachable distillation flask, a detachable condenser and a motor are installed on the support said. The distillation flask is heated by a heating component. A collection flask is connected to the condenser said at the condenser's bottom. A vacuum pumping device is connected to the condenser at the condenser's top. The motor said drives the distillation flask to rotate.

A liquid outlet of the distillation flask is formed at the bottom of the distillation flask said of working state. A quantitative component of concentrate is connected to the liquid outlet of the distillation flask. The quantitative component of concentrate is used to control the volume of the concentrate accurately.

The quantitative component of concentrate said includes a metering tube of concentrate. Scale lines are set on the outer wall of the metering tube of concentrate said. The second discharge valve is set at the bottom of the metering tube of concentrate said. The second discharge valve is used to control concentrate discharge and sealing of the distillation flask.

The metering tube of concentrate said is a thin tube. The volume value of the metering tube of concentrate is suitable for a certain value of 1-20mL.

The first discharge valve said is set at the liquid outlet of the distillation flask. The first discharge valve is used to control concentrate discharge and sealing of the distillation flask. The liquid outlet of the distillation flask is formed at the lowest horizontal position of the distillation flask of working state.

The quantitative tube of concentrate and the liquid outlet of distillation flask are integrally formed or connected and sealed by glass grinding mouths. The glass grinding mouths are fixed by a clamp.

A quantitative expansion vessel of concentrate is connected to the end (far away from the liquid outlet of the distillation flask) of the quantitative component of concentrate by glass grinding mouths. The compatibility of the quantitative component of concentrate and the quantitative expansion vessel of concentrate said is used to increase volume of concentrate for drainage at one time.

The quantitative expansion vessels of concentrate of multiple volumes can be set. The quantitative expansion vessel of concentrate of some volume can be selected as required.

The volume of the quantitative expansion vessel of concentrate includes 10mL, 20 mL, 30 mL, 50 mL, 100 mL and 200mL, but not limited to.

The heating component said is an electric heating belt set on the outer wall of the distillation flask. Preferably, the electric heating belt is wrapped around the outer wall of the distillation flask.

A glass fiber tape is wrapped around the outside of the electric heating belt to fix the electric heating belt and to prevent heat loss.

A temperature controller sensor probe is set between the heating belt and the distillation flask said.

To achieve the above purpose, a kind of rotary evaporator which the volume of distillate can be accurately controlled is provided by the invention. The rotary evaporator said includes a support, a detachable distillation flask, a detachable condenser and a motor are installed on the support said. The distillation flask is heated by a heating component. A collection flask is connected to the condenser said at the condenser's bottom. A vacuum pumping device is connected to the condenser at the condenser's top. The motor said drives the distillation flask to rotate.

A liquid outlet of the collection flask is formed at the bottom of the collection flask said. A quantitative component of distillate is connected to the liquid outlet of the collection flask. The quantitative component of distillate is used to control the volume of distillate accurately.

The quantitative component of distillate said includes a metering tube. Scale lines are set on the outer wall of the metering tube of distillate said. The second drainage valve is set at the bottom of the metering tube of distillate said. The second drainage valve is used to control quantitative distillate discharge and sealing of the collection flask.

The metering tube of distillate is a thin tube. The volume value of the metering tube of distillate is suitable for a certain value of 1-20mL.

The first drainage valve is set at the liquid outlet of the collection flask. The first drainage valve is used to control quantitative distillate discharge and sealing of the collection flask.

The liquid outlet of the collection flask said is formed at the lowest horizontal position of the collection flask.

The quantitative component of distillate and the liquid outlet of the collection flask are integrally formed or connected and sealed by glass grinding mouths. The glass grinding mouths are fixed by a clamp.

A quantitative expansion vessel of distillate is connected to the end (far away from the liquid outlet of the collection flask) of the quantitative component of distillate. The compatibility of the quantitative component of distillate and the quantitative expansion vessel of distillate said is used to increase volume of distillate for drainage at one time.

The quantitative expansion vessel of distillate and the quantitative component of distillate are connected and sealed by glass grinding mouths. The glass grinding mouths are fixed by a clamp.

The quantitative expansion vessel of distillate of multiple volumes can be set. The quantitative expansion vessel of distillate of some volume can be selected as required.

The volume of the quantitative expansion vessel of distillate includes 10mL, 20 mL, 30 mL, 50 mL, 100 mL and 200mL, but not limited to.

To achieve the above purpose, a kind of rotary evaporator which the volume of concentrate and the volume of distillate can be accurately controlled is provided by the invention. The rotary evaporator said includes a support, a detachable distillation flask, a detachable condenser and a motor are installed on the support said. The distillation flask is heated by a heating component. A collection flask is connected to the bottom of the condenser. A vacuum pumping device is connected to the condenser at the condenser's top. The motor said drives the distillation flask to rotate.

A liquid outlet of the distillation flask is formed at the bottom of the distillation flask of working state. A quantitative component of concentrate is connected to the liquid outlet of the distillation flask. The quantitative component of concentrate is used to control the volume of the concentrate accurately.

A liquid outlet of the collection flask is formed at the bottom of the collection flask said. A quantitative component of distillate is connected to the liquid outlet of the collection flask. The quantitative component of distillate is used to control the volume of distillate accurately.

The quantitative component of concentrate said includes a metering tube of concentrate with scale lines set on the outer wall. The second discharge valve is set at the bottom of the metering tube of concentrate said. The second discharge valve is used to control concentrate discharge and sealing of the distillation flask.

The metering tube of concentrate is a thin tube. The volume value of the metering tube of concentrate is suitable for a certain value of 1-20mL.

The quantitative component of distillate said includes a metering tube of distillate with scale lines set on the outer wall. The second drainage valve is set at the bottom of the metering tube of distillate said. The second drainage valve is used to control quantitative distillate discharge and sealing of the collection flask.

The metering tube of distillate is a thin tube. The volume value of the metering tube of distillate is suitable for a certain value of 1-20mL.

The first discharge valve said is set at the liquid outlet of the distillation flask. The first discharge valve is used to control concentrate discharge and sealing of the distillation flask. The liquid outlet of the distillation flask is formed at the lowest horizontal position of the distillation flask of working state.

The first drainage valve said is set at the liquid outlet of the collection flask. The first drainage valve is used to control quantitative distillate discharge and sealing of the collection flask. The liquid outlet of the collection flask is formed at the lowest horizontal position of the collection flask.

The quantitative component of concentrate and the liquid outlet of the distillation flask are integrally formed or connected and sealed by glass grinding mouths. The glass grinding mouths are fixed by a clamp.

The quantitative component of distillate and the liquid outlet of the collection flask are integrally formed or connected and sealed by glass grinding mouths. The glass grinding mouths are fixed by a clamp.

A quantitative expansion vessel of concentrate is connected to the end (far away from the liquid outlet of the distillation flask) of the quantitative component of concentrate. The compatibility of the quantitative component of concentrate and the quantitative expansion vessel of concentrate said is used to increase volume of concentrate for drainage at one time.

A quantitative expansion vessel of distillate is connected to the end (far away from the liquid outlet of the collection flask) of the quantitative component of distillate. The compatibility of the quantitative component of distillate and the quantitative expansion vessel of distillate said is used to increase volume of distillate for drainage at one time.

The quantitative expansion vessels of concentrate of multiple volumes can be set. The quantitative expansion vessel of concentrate of some volume may be selected as required. The quantitative expansion vessel of concentrate and the quantitative component of concentrate are connected and sealed by glass grinding mouths. The glass grinding mouths are fixed by a clamp.

The quantitative expansion vessels of distillate of multiple volumes can be set. The quantitative expansion vessel of distillate of some volume can be selected as required. The quantitative expansion vessel of distillate and the quantitative component of distillate are connected and sealed by glass grinding mouths. The glass grinding mouths are fixed by a clamp.

The volume of the quantitative expansion vessel of concentrate includes 10mL, 20 mL, 30 mL, 50 mL, 100 mL and 200mL, but not limited to.

The volume of the quantitative expansion vessel of distillate includes 10mL, 20 mL, 30 mL, 50 mL, 100 mL and 200mL, but not limited to.

The heating component said is an electric heating belt set on the outer wall of the distillation flask. Preferably, the electric heating belt is wrapped around the outer wall of the distillation flask.

A glass fiber tape is wrapped around the outside of the electric heating belt to fix the electric heating belt and to prevent heat loss.

A temperature controller sensor probe is set between the heating belt and the distillation flask said.

There are several advantages of the invention that the rotary evaporator which the volume of concentrate can be accurately controlled. The concentrate can be drained without disassembling the distillation flask, the reason is that a liquid outlet is formed at the lowest horizontal position of the distillation flask of working state. Small changes of the volume of the concentrate can be observed, the reason is that a metering tube of concentrate is set at the liquid outlet of the distillation flask. The first discharge valve is closed immediately as soon as the volume of the concentrate is the designed volume, the distillation is stopped simultaneously, the concentrate of accurate volume is discharged after the second discharge valve is opened. The concentrate rate (the ratio of the concentrate volume to the feed volume) can be obtained. The difference of concentrates from different samples can be compared on the basis of same concentrate rate by determining the components of the concentrates and other indicators which indicate the quality of the concentrates. The difference of concentrates from a sample also can be compared on the basis of different concentrate rate. The distillation flask of the invention is heated by the heating belt instead of water bath (or oil bath), not only reduces the capacity of the rotary evaporator, but also saves water (or oil). The concentrate can be discharged through the liquid outlet of the distillation flask. The lifting system and angle adjustment system are not needed. Reduced system components save costs.

There are several advantages of the invention that the rotary evaporator which the volume of the distillate can be accurately controlled. The distillate can be drained without disassembling the collection flask, the reason is that a liquid outlet is formed at the bottom of the collection flask. Small changes of the volume of the distillate can be observed, the reason is that the metering tube of distillate is connected to the liquid outlet of the collection flask. The first drainage valve is closed immediately as soon as the volume of the distillate is the designed volume, the distillation is stopped simultaneously, the distillate of accurate volume is discharged after the second drainage valve is opened. The solvent reclamation rate (the ratio of the distillate volume to the feed volume) can be obtained. The difference of distillates from different samples can be compared on the basis of same solvent reclamation rate by determining the components of and other indicators of the distillates which indicate the quality of the distillates. The difference of distillates from a sample also can be compared on the basis of different solvent reclamation rate.

There are several advantages of the invention that the rotary evaporator which the volume of the concentrate and the volume of the distillate can be accurately controlled. The concentrate can be drained without disassembling the distillation flask, the reason is that a liquid outlet is formed at the lowest horizontal position of the distillation flask of working state. The distillate can be drained without disassembling the collection flask, the reason is that a liquid outlet is formed at the bottom of the collection flask. Small changes of the volume of the concentrate and those of the distillate can be observed, the reason is that a metering tube of concentrate and another metering tube of distillate are connected and sealed separately to the liquid outlet of the distillation flask and to the liquid outlet of the collection flask. The first drainage valve of the distillate is closed immediately as soon as the volume of the distillate is the designed volume of distillate. The first discharge valve of the concentrate is closed immediately as soon as the volume of the concentrate is the designed volume of concentrate, the distillation is stopped simultaneously. The distillate of accurate volume is discharged after the second drainage valve of the distillate is opened. The concentrate of accurate volume is discharged after the second discharge valve of the concentrate is opened. The accurate volume of the concentrate is used to calculate the concentrate rate. The difference of concentrates from different samples can be compared on the basis of same concentrate rate by determining the components of the concentrates and other indicators which indicate the quality of the concentrates. The difference of concentrates from a sample also can be compared on the basis of different concentrate rate. The accurate volume of the distillate is used to calculate the solvent reclamation rate. The difference of distillates from different samples can be compared on the basis of same solvent reclamation rate by determining the components of the distillates and other indicators which indicate the quality of the distillates. The difference of distillates from a sample also can be compared on the basis of different solvent reclamation rate. The distillation flask is heated by the heating belt instead of water bath (or oil bath), not only reduces the capacity of the rotary evaporator, but also saves water (or oil). The concentrate can be discharged through the liquid outlet of the distillation flask. The lifting system and angle adjustment system are not needed. Reduced system components save costs.

### BRIEF DESCRIPTION OF DRAWINGS

Fig. 1 is a structural diagram of the rotary evaporator said of embodiment 1 of the invention
Fig. 2 is a structural diagram of the rotary evaporator said of embodiment 2 of the invention
Fig. 3 is a structural diagram of the rotary evaporator said of embodiment 3 of the invention
Fig. 4 is a kind of structural diagram of the quantitative expansion vessel said of the invention

Mark as: 1-support, 2-distillation flask, 3-condenser, 4-collection flask, 5-the liquid outlet of collection flask, 6-the first drainage valve, 7-the metering tube of distillate, 8-scale line, 9-the second drainage valve, 10-motor, 11-the liquid outlet of distillation flask, 12-the first discharge valve, 13-the metering tube of concentrate, 14-scale line, 15-the second discharge valve, 16-electric heating belt, 17-quantitative expansion vessel of distillate, 18-quantitative expansion vessel of concentrate, 19-clamp, 20-drip pan

### DETAILED DESCRIPTION OF THE PREFERRED EMBODIMENTS

In order to make the purpose, the features and the advantages of the invention easier to be understood, the following is a further detailed description of the invention in combination with the attached figures and embodiments.

### Embodiment 1

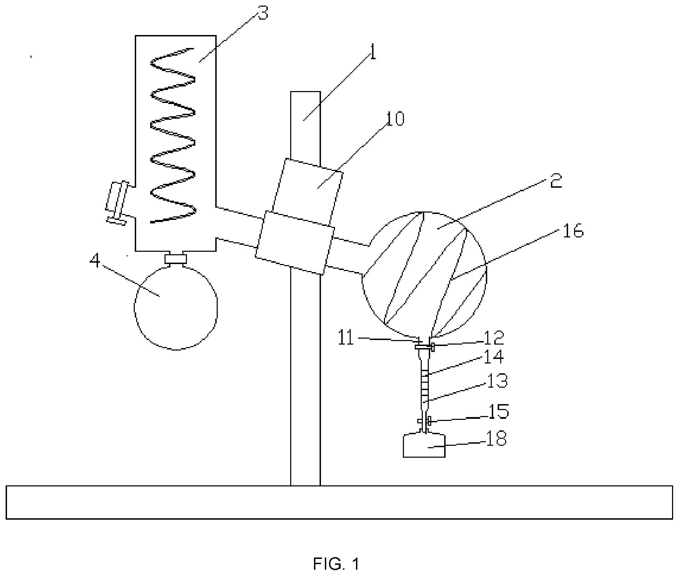

As shown in Figure 1, a rotary evaporator which the volume of the concentrate can be accurately controlled described in the embodiment includes a support 1, a detachable distillation flask 2 and a detachable condenser 3 are installed on the support 1 said. The solution to be distilled is put into the distillation flask 2 and is heated to evaporate by a heating component. A collection flask 4 is connected to the condenser 3 said at the condenser's bottom. The collection flask 4 said is used to collect distillate. A motor 10 is set on the support 1 said. The motor 10 said control rotation of the distillation flask 2 said. A control panel for controlling rotation speed and heating temperature, a control component for controlling rotation speed and a control component for controlling heating temperature are also set on the support 1 said, not shown in figures. Vacuum pumping components are also not shown in figures.

As shown in Figure 1, a liquid outlet of the distillation flask 11 is formed at the bottom of the distillation flask 2 said of working state. Preferably, the liquid outlet of the distillation flask 11 is formed at the lowest horizontal position of the distillation flask 2 said of working state. A first discharge valve 12 is set at the liquid outlet of the distillation flask 11 and is used for the discharge control of concentrate and the sealing of the distillation flask 2 said. The first discharge valve 12 said can be made of glass or polytetrafluoroethylene.

The rotary evaporator said of the embodiment also includes a quantitative component of concentrate. The quantitative component is used to control the volume of concentrate accurately. The quantitative component of concentrate and the liquid outlet of distillation flask 11 are integrally formed or connected and sealed by glass grinding mouths. The glass grinding mouths are fixed by a steel clamp 19 with a screw to keep the system sealed.

As shown in Figure 1, preferably, the quantitative component of concentrate of the embodiment said includes a metering tube of concentrate 13. Scale lines 14 are set on the outer wall of the metering tube of concentrate 13 said and are used to determine the volume of concentrate. The second discharge valve 15 is set at the bottom of the metering tube of concentrate 13 said. The second discharge valve is used to control concentrate discharge and sealing of the distillation flask. Optionally, the metering tube of concentrate 13 said of the embodiment may be a measurable thin tube. The measurable volume of the measurable thin tube is suitable for 1-10mL. The measurement scale of the measurable thin tube may be accurate to 0.01mL or even to 0.005mL. The second discharge valve 15 said may be made of glass or polytetrafluoroethylene.

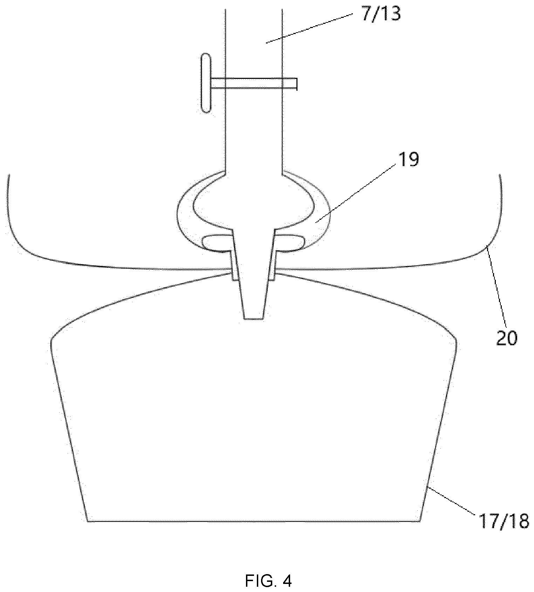

Optionally, as shown in Figure 1, a quantitative expansion vessel of concentrate 18 is connected to the bottom of the metering tube of concentrate 13 (close to the second discharge valve 15) by glass grinding mouths. The glass grinding mouths are fixed by a clamp. The measurable volume of concentrate is increased by setting the quantitative expansion vessel of concentrate 18 when the volume of the metering tube of concentrate 13 isn't enough. In this way, the measurement volume of concentrate is accurate result from one-time discharge of concentrate required. One-time discharge reduces the error of multiple readings required for multiple discharge. The cooperation of the quantitative expansion vessel of concentrate 18 said and the metering tube of concentrate 13 said expands the volume of the metering tube of concentrate 13 said. There are many options for the volume of the quantitative expansion vessel of concentrate 18 said, such as 10mL, 20 mL, 30 mL, 50 mL, 100 mL and 200mL. A suitable quantitative expansion vessel of concentrate is chosen as required for one-time discharge of concentrate. The quantitative expansion vessel of concentrate 18 can be chosen in the shape of a flat bottom bottle or an elbow according to the distance between the distillation flask 2 and the laboratory table. The glass grinding mouth of the quantitative expansion vessel of concentrate 18 and the glass grinding mouth of the metering tube of concentrate 13 must be matched result in sealing. Preferably, as shown in Figure 4, a drip pan 20 is integrated with the quantitative expansion vessel of concentrate 18. The drip pan 20 said is used to contain the solution flowing from the metering tube of concentrate 13 said.

As shown in Figure 1, the heating component is used to heat the solution to be distilled in the distillation flask 2. The heating component of the embodiment is an electric heating belt 16 wrapped around the outer wall of the distillation flask 2 to ensure uniform heating. The solution to be distilled is heated and evaporated through heat conduction of the wall of the distillation flask 2 by the electric belt 16. At the same time, a glass fiber tape is set outside of the electric heating belt 16 as insulator and fixing layer to prevent heat loss and fix the heating belt 16. A temperature controller sensor probe is set between the heating belt 16 and the outer wall of the distillation flask 2 for heating temperature detection.

The second discharge valve 15 of the rotary evaporator said of the embodiment is closed at the beginning of distillation to ensure negative pressure inside the distillation flask 2. The volume of concentrate is observed during distillation. The first discharge valve 12 is closed as soon as the volume of concentrate is the volume designed, the distillation is stopped simultaneously, the concentrate of accurate volume is discharged after the second discharge valve 15 is opened, the concentrate is used to determine its composition and other indicators which indicate the quality of concentrate. The volume value of concentrate discharged is used to calculate concentrate rate. The difference can be compared between two concentrates from a sample on the basis of different concentrate rate.

### Embodiment 2

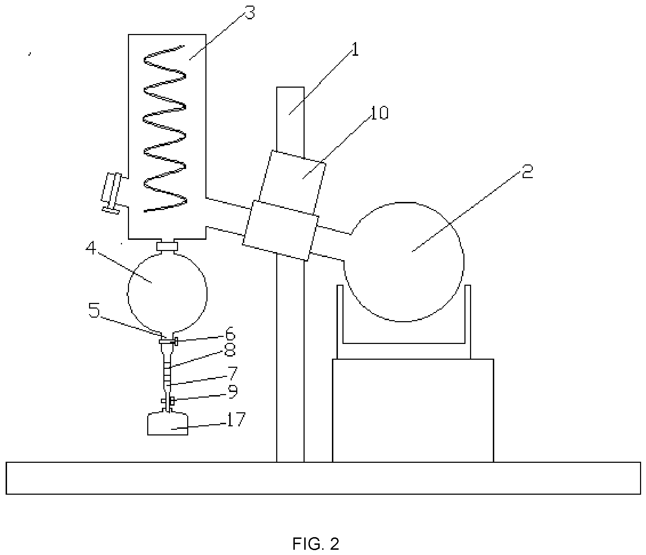

As shown in Figure 2, the rotary evaporator which the volume of the distillate can be accurately controlled described in the embodiment includes a support 1, a detachable distillation flask 2 and a detachable condenser 3 are installed on the support 1 said. The solution to be distilled is put into the distillation flask 2 and is heated to evaporate by a heating component. A collection flask 4 is connected to the bottom of condenser 3 said. The collection flask 4 said is used to collect distillate. A motor 10 is set on the support 1 said. The motor 10 said control rotation of the distillation flask 2 said. A control panel for controlling rotation speed and heating temperature, a control component for controlling lifting of the distillation flask 2 said and a control component for controlling heating temperature are also set on the support 1 said, not shown. The heating component is a water bath (or oil bath) set below the distillation flask 2 or an electric heating belt wrapped outside the distillation flask 2. The solution to be distilled in the distillation flask 2 is heated by contact of the low part of the distillation flask 2 and heating liquid in the water bath pot.

As shown in Figure 2, a liquid outlet of the collection flask 5 is formed at the bottom of the collection flask 4 said. Preferably, the liquid outlet of the collection flask 5 is formed at the lowest horizontal position of the collection flask 4 said. A first drainage valve 6 is set at the liquid outlet of the collection flask 5 and is used to control distillate discharge and sealing of the collection flask. The first drainage valve 6 said can be made of glass or polytetrafluoroethylene.

The rotary evaporator said of the embodiment also includes a quantitative component of distillate. The quantitative component of distillate is connected to the liquid outlet of the collection flask 5. The quantitative component is used to control the volume of distillate accurately. The quantitative component of distillate and the liquid outlet of the collection flask 5 are integrally formed or connected and sealed by glass grinding mouths. The glass grinding mouths are fixed by a steel clamp 19 with a screw to keep the system sealed.

As shown in Figure 2, preferably, the quantitative component of distillate of the embodiment said includes a metering tube of distillate 7 which is connected to the liquid outlet of the collection flask 5. Scale lines 8 are set on the outer wall of the metering tube of distillate 7 said. The metering tube of distillate 7 said is used to determine the volume of distillate accurately. The second drainage valve 9 is set at the bottom of the metering tube of distillate 7 said. The second drainage valve is used to control quantitative distillate discharge and sealing of the collection flask. Optionally, the metering tube of distillate 7 said of the embodiment may be a measurable thin tube. The measurable volume of the measurable thin tube is suitable for 1∼10mL. The measurement scale of the measurable thin tube may be accurate to 0.01mL or even to 0.005mL. The second drainage valve 9 said may be made of glass or polytetrafluoroethylene.

Optionally, as shown in Figure 2, a quantitative expansion vessel of distillate 17 is connected to the bottom of the metering tube of distillate 7 (close to the second drainage valve 9) by glass grinding mouths. The glass grinding mouths are fixed by a clamp. The measurable volume of distillate is increased by setting the quantitative expansion vessel of distillate 17 when the volume of the metering tube of distillate 7 isn't enough. In this way, the measurement volume of distillate is accurate result from one-time discharge of distillate required. One-time discharge reduces the error of multiple readings required for multiple discharge. The cooperation of the quantitative expansion vessel of distillate 17 said and the metering tube of distillate 7 said expands the volume of the metering tube of distillate 7 said. There are many options for the volume of the quantitative expansion vessel of distillate 17 said, such as 10mL, 20 mL, 30 mL, 50 mL, 100 mL and 200mL. A suitable quantitative expansion vessel of distillate 17 is chosen as required for one-time discharge of distillate. The quantitative expansion vessel of distillate 17 may be chosen in the shape of a flat bottom bottle or an elbow according to the distance between the collection flask 4 and the laboratory table. The glass grinding mouth of the quantitative expansion vessel of distillate 17 and the glass grinding mouth of the metering tube of distillate 7 must be matched result in sealing. Preferably, as shown in Figure 4, a drip pan 20 is integrated with the quantitative expansion vessel of distillate 17. The drip pan 20 said is used to contain the solution flowing from the metering tube of distillate 7 said.

The second drainage valve 9 of the rotary evaporator said of the embodiment is closed at the beginning of distillation to ensure negative pressure inside the collection flask 4. The volume of distillate is observed during distillation. The first drainage valve 6 is closed as soon as the volume of distillate is the volume designed, the distillation is stopped simultaneously, the distillate of accurate volume is discharged after the second drainage valve 9 is opened. The distillate is used to determine its composition and other indicators which indicate the quality of distillate. The volume value of distillate discharged is used to calculate solvent reclamation rate. The difference can be compared between two distillates from a sample on the basis of different solvent reclamation rate.

### Embodiment 3

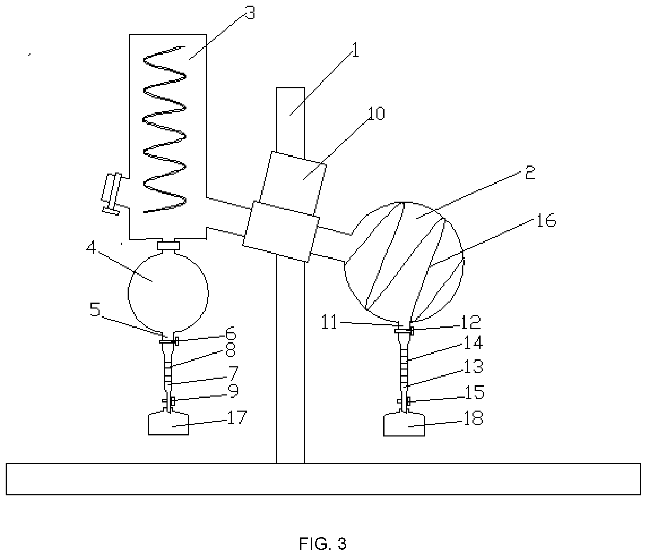

Optionally, as shown in Figure 3, a rotary evaporator which the volume of the concentrate and the volume of the distillate can be accurately controlled described in the embodiment includes a support 1, a detachable distillation flask 2 and a detachable condenser 3 are installed on the support 1 said. The solution to be distilled is put into the distillation flask 2 and is heated to evaporate by a heating component. A collection flask 4 is connected to the condenser 3 said at the condenser's bottom. The collection flask 4 said is used to collect distillate. A motor 10 is set on the support 1 said. The motor 10 said controls rotation of the distillation flask 2 said. A control panel for controlling rotation speed and heating temperature, control components for controlling heating temperature are also set on the support 1 said, not shown.

As shown in Figure 3, a liquid outlet of the collection flask 5 is formed at the bottom of the collection flask 4 said. Preferably, the liquid outlet of the collection flask 5 is formed at the lowest horizontal position of the collection flask 4 said. A first drainage valve 6 is set at the liquid outlet of the collection flask 5. The first drainage valve 6 said is used to control quantitative distillate discharge and sealing of the collection flask. The first drainage valve 6 said may be made of glass or polytetrafluoroethylene.

The rotary evaporator said of the embodiment also includes a quantitative component of distillate. The quantitative component of distillate is connected to the liquid outlet of the collection flask 5. The quantitative component is used to control the volume of distillate accurately. The quantitative component of distillate and the liquid outlet of the collection flask 5 are integrally formed or connected and sealed by glass grinding mouths. The glass grinding mouths are fixed by a steel clamp 19 with a screw to keep the system sealed.

As shown in Figure 3, the quantitative component of distillate of the embodiment said includes a metering tube of distillate 7. Scale lines 8 are set on the outer wall of the metering tube of distillate 7 said. The metering tube of distillate 7 said is used to determine the volume of distillate accurately. The second drainage valve 9 is set at the bottom of the metering tube of distillate 7 said. The second drainage valve is used to control quantitative distillate discharge and sealing of the collection flask. Optionally, the metering tube of distillate 7 said of the embodiment may be a measurable thin tube. The measurable volume of the measurable thin tube is suitable for 1∼10mL. The measurement scale of the measurable thin tube may be accurate to 0.01mL or even to 0.005mL. The second drainage valve 9 said may be made of glass or polytetrafluoroethylene.

Optionally, as shown in Figure 3, a quantitative expansion vessel of distillate 17 is connected to the end of the metering tube of distillate 7 (close to the second drainage valve 9) by glass grinding mouths. The glass grinding mouths are fixed by a clamp 19. The measurable volume of distillate is increased by setting the quantitative expansion vessel of distillate 17 when the volume of the metering tube of distillate 7 isn't enough. In this way, the measurement volume of distillate is accurate result from one-time discharge of distillate required. One-time discharge reduces the error of multiple readings required for multiple discharge. The cooperation of the quantitative expansion vessel of distillate 17 said and the metering tube of distillate 7 said expands the volume of the metering tube of distillate 7 said. There are many options for the volume of the quantitative expansion vessel of distillate 17 said, such as 10mL, 20 mL, 30 mL, 50 mL, 100 mL and 200mL. A suitable quantitative expansion vessel of distillate 17 is chosen as required for one-time discharge of distillate. The quantitative expansion vessel of distillate 17 may be chosen in the shape of a flat bottom bottle or an elbow according to the distance between the collection flask 4 and the laboratory table. The glass grinding mouth of the quantitative expansion vessel of distillate 17 and the glass grinding mouth of the metering tube of distillate 7 must be matched result in sealing. Preferably, as shown in Figure 4, a drip pan 20 is integrated with the quantitative expansion vessel of distillate 17. The drip pan 20 said is used to contain the solution flowing from the metering tube of distillate 7 said.

As shown in Figure 3, a liquid outlet of the distillation flask 11 is formed at the bottom of the distillation flask 2 said of working state. Preferably, the liquid outlet of the distillation flask 11 is formed at the lowest horizontal position of the distillation flask 2 said of working state. A first discharge valve 12 is set at the liquid outlet of the distillation flask 11. The first discharge valve 12 is used to control quantitative concentrate discharge accurately and sealing of the distillation flask. The first discharge valve 12 said may be made of glass or polytetrafluoroethylene.

The rotary evaporator said of the embodiment also includes a quantitative component of concentrate. The quantitative component is connected to the liquid outlet of distillation flask 11. The quantitative component is used to control the volume of concentrate accurately. The quantitative component of concentrate and the liquid outlet of distillation flask 11 are integrally formed or connected and sealed by glass grinding mouths. The glass grinding mouths are fixed by a steel clamp 19 with a screw to keep the system sealed.

As shown in Figure 3, preferably, the quantitative component of concentrate of the embodiment said includes a metering tube of concentrate 13. The metering tube of concentrate 13 is connected to the liquid outlet of distillation flask 11. Scale lines 14 are set on the outer wall of the metering tube of concentrate 13 said. The second discharge valve 15 is set at the bottom of the metering tube of concentrate 13 said. The second discharge valve is used to control concentrate discharge and sealing of the distillation flask. Optionally, the metering tube of concentrate 13 said of the embodiment may be a measurable thin tube. The measurable volume of the measurable thin tube is suitable for 1∼10mL. The measurement scale of the measurable thin tube may be accurate to 0.01mL or even to 0.005mL. The second discharge valve 15 said may be made of glass or polytetrafluoroethylene.

Optionally, as shown in Figure 3, a quantitative expansion vessel of concentrate 18 is connected to the end of the metering tube of concentrate 13 (close to the second discharge valve 15) by glass grinding mouths. The glass grinding mouths are fixed by a clamp 19. The measurable volume of concentrate is increased by setting the quantitative expansion vessel of concentrate 18 when the volume of the metering tube of concentrate 13 isn't enough. In this way, the measurement volume of concentrate is accurate result from one-time discharge of concentrate required. One- time discharge reduces the error of multiple readings required for multiple discharge. The cooperation of the quantitative expansion vessel of concentrate 18 said and the metering tube of concentrate 13 said expands the volume of the metering tube of concentrate 13 said. There are many options for the volume of the quantitative expansion vessel of concentrate 18 said, such as 10mL, 20 mL, 30 mL, 50 mL, 100 mL and 200mL. A suitable quantitative expansion vessel of concentrate is chosen as required for one-time accurate discharge of concentrate. The quantitative expansion vessel of concentrate 18 may be chosen in the shape of a flat bottom bottle or an elbow according to the distance between the distillation flask 2 and the laboratory table. The glass grinding mouth of the quantitative expansion vessel of concentrate 18 and the glass grinding mouth of the metering tube of concentrate 13 must be matched result in sealing. Preferably, as shown in Figure 4, a drip pan 20 is integrated with the quantitative expansion vessel of concentrate 18. The drip pan 20 said is used to contain the solution flowing from the metering tube of concentrate 13 said.

As shown in Figure 3, the heating component is used to heat the solution to be distilled in the distillation flask 2. The heating component of the embodiment is an electric heating belt 16 set at the outer wall of the distillation flask 2. Preferably, the heating component is an electric heating belt 16 wrapped around the outer wall of the distillation flask 2 to ensure uniform heating. The solution to be distilled is heated to evaporate through heat conduction of the wall of the distillation flask 2 by the electric belt 16. At the same time, a glass fiber tape is set outside of the electric heating belt 16 as heat insulator and fixing layer to prevent heat loss and fix the heating belt 16. A temperature controller sensor probe is set between the heating belt 16 and the outer wall of the distillation flask 2 for heating temperature detection.

The second drainage valve 9 and the second discharge valve 15 of the rotary evaporator said of the embodiment are closed at the beginning of distillation to ensure negative pressure inside the distillation flask 2 and inside the collection flask 4. The volume of distillate and the volume of concentrate are observed during distillation. The first drainage valve 6 is closed as soon as the volume of distillate is the volume designed. The first discharge valve 12 is closed as soon as the volume of concentrate is the volume designed, the distillation is stopped simultaneously, the distillate of accurate volume is discharged after the second drainage valve 9 is opened, the distillate is used to determine its composition and other indicators which indicate the quality of distillate. The volume value of distillate discharged is used to calculate solvent reclamation rate. The concentrate of accurate volume is discharged after the second discharge valve 15 is opened. The concentrate is used to determine its composition and other indicators which indicate the quality of concentrate. The volume value of concentrate discharged is used to calculate concentrate rate. The difference can be compared between two distillates from different distillation samples on the basis of same solvent reclamation rate. The difference can also be compared between two distillates from a sample on the basis of different solvent reclamation rate. The difference can be compared between two concentrates from different distillation samples on the basis of same concentrate rate. The difference can also be compared between two concentrates from a sample on the basis of different concentrate rate.

The embodiments of the invention are described in detail above. The principle and concrete manifestation of the invention are described with specific embodiments. The description of the above embodiments is used to help understand the method and the core idea of the invention. Concrete manifestation and the scope of application will be changed by general technical personnel in the field according to the idea of the invention. In summary, the content of specification shall not be understood as a limitation of the invention.

## Claims

1. A rotary evaporator which the volume of concentrate can be accurately controlled includes a support (1), a detachable distillation flask (2) and a detachable condenser (3) are installed on the support (1) said. The distillation flask (2) is heated by a heating component. A collection flask (4) is connected to the condenser (3) said at its bottom.
A liquid outlet of the distillation flask (11) is formed at the bottom of the distillation flask (2) said of working state. The liquid outlet of distillation flask (11) said is connected to a quantitative component of concentrate. The quantitative component of concentrate is used to control the volume of concentrate accurately.

2. According to the claim 1, a characteristic of the rotary evaporator said which the volume of concentrate can be accurately controlled is that the quantitative component of concentrate said includes a metering tube of concentrate (13). Scale lines (14) are set on the outer wall of the metering tube of concentrate (13) said. The second discharge valve (15) is set at the bottom of the metering tube of concentrate (13) said. The second discharge valve (15) is used to control quantitative concentrate discharge and sealing of the distillation flask.
The first discharge valve (12) is set at the liquid outlet of the distillation flask (11). The first discharge valve (12) is used to control quantitative concentrate discharge accurately and sealing of the distillation flask.

3. According to the claim 1 or the claim 2, a characteristic of the rotary evaporator said which the volume of the concentrate can be accurately controlled is that a quantitative expansion vessel of concentrate (18) is connected to the end (far away from the liquid outlet of the distillation flask (11)) of the quantitative component of concentrate by glass grinding mouths. Two glass grinding mouths are fixed by a clamp. Compatibility of the quantitative component of concentrate and the quantitative expansion vessel of concentrate (18) said is used to increase volume of concentrate for drainage at one time. The quantitative expansion vessel of concentrate (18) of multiple volumes can be set. The quantitative expansion vessel of concentrate (18) of some volume can be selected as required.

4. According to the any one of the claims 1 to 3, a characteristic of the rotary evaporator said which the volume of the concentrate can be accurately controlled is that the heating component said is an electric heating belt (16) set on the outer wall of the distillation flask (2) said, a temperature controller sensor probe is set between the electric heating belt (16) and the distillation flask (2) said.

5. A rotary evaporator which the volume of distillate can be accurately controlled includes a support (1), a detachable distillation flask (2) and a detachable condenser (3) are installed on the support (1) said. The distillation flask (2) said is heated by a heating component. A collection flask (4) is connected to the condenser (3) said at the condenser's bottom.
A liquid outlet of the collection flask (5) is formed at the bottom of the collection flask (4) said. The liquid outlet of the collection flask (5) is connected to a quantitative component of distillate. The quantitative component of distillate is used to control the volume of distillate accurately.

6. According to the claim 5, a rotary evaporator which the volume of the distillate can be accurately controlled, the quantitative component of distillate said includes a metering tube of distillate (7). Scale lines (8) are set on the outer wall of the metering tube of distillate (7) said. The second drainage valve (9) is set at the bottom of the metering tube of distillate (7) said. The second drainage valve is used to control quantitative distillate discharge and sealing of the collection flask. The first drainage valve (6) said is set at the liquid outlet of the collection flask (5). The first drainage valve (6) is used to control quantitative distillate discharge and sealing of the collection flask.

7. According to the claim 5 or the claim 6, a rotary evaporator which the volume of the distillate can be accurately controlled, a quantitative expansion vessel of distillate (17) is connected to the end (far away from the liquid outlet of the collection flask (5)) of the quantitative component of distillate. The compatibility of the quantitative component of distillate and the quantitative expansion vessel of distillate (17) said is used to increase volume of distillate for drainage at one time. The quantitative expansion vessel of distillate (17) of multiple volumes can be set. The quantitative expansion vessel of distillate (17) of some volume can be selected as required.

8. A rotary evaporator which the volume of concentrate and the volume of distillate can be accurately controlled includes a support (1), a detachable distillation flask (2) and a detachable condenser (3) are installed on the support (1) said. The distillation flask (2) said is heated by a heating component. A collection flask (4) is connected to the condenser (3) said at the condenser's bottom.
A liquid outlet of the distillation flask (11) is formed at the bottom of the distillation flask (2) said of working state. The liquid outlet of distillation flask (11) said is connected to a quantitative component of concentrate. The quantitative component of concentrate is used to control the volume of concentrate accurately.
A liquid outlet of the collection flask (5) is formed at the bottom of the collection flask (4) said. The liquid outlet of the collection flask (5) is connected to a quantitative component of distillate. The quantitative component of distillate is used to control the volume of the distillate accurately.

9. According to the claim 8, the rotary evaporator which the volume of concentrate and the volume of distillate can be accurately controlled, the quantitative component of concentrate said includes a metering tube of concentrate (13). Scale lines (14) are set on the outer wall of the metering tube of concentrate (13) said. The second discharge valve (15) is set at the bottom of the metering tube of concentrate (13) said. The second discharge valve is used to control concentrate discharge and sealing of the distillation flask.
The quantitative component of distillate said includes a metering tube of distillate (7). Scale lines (8) are set on the outer wall of the metering tube of distillate (7) said. The second drainage valve (9) is set at the bottom of the metering tube of distillate (7) said. The second drainage valve (9) is used to control distillate discharge and sealing of the collection flask.

10. According to the claim 8 or the claim 9, the rotary evaporator which the volume of concentrate and the volume of distillate can be accurately controlled, a quantitative expansion vessel of concentrate (18) is connected to the end (far away from the liquid outlet of the distillation flask (11) of the quantitative component of concentrate by glass grinding mouths. Two glass grinding mouths are fixed by a clamp. The compatibility of the quantitative component of concentrate and the quantitative expansion vessel of concentrate (18) said is used to increase volume of concentrate for drainage at one time.
A quantitative expansion vessel of distillate (17) is connected to the end (far away from the liquid outlet of the collection flask (5) of the quantitative component of distillate by glass grinding mouths. Two glass grinding mouths are fixed by a clamp. The compatibility of the metering tube of distillate (7) and the quantitative expansion vessel of distillate (17) said is used to increase volume of distillate for drainage at one time.
